# EUROPEAN PATENT APPLICATION

(11) **EP 4 503 744 A1**
(43) Date of publication of application: **05.02.2025**
(21) Application number: 22933416.4
(22) Date of filing: 24.03.2022
(51) Int. Cl.: H04W 36/30, H04W 36/36

(54) **TERMINAL DEVICE AND WIRELESS COMMUNICATION METHOD**

(71) Applicant: Softbank Corp., Tokyo 105-7529 (JP)
(72) Inventor: UEMURA, Katsunari, Tokyo 105-7529 (JP)
(74) Representative: Meissner Bolte Partnerschaft mbB
(86) International application number: PCT/JP2022/014041
(87) International publication number: WO 2023/181275

(57) **Abstract**

There is provided a terminal device including: a reception unit that receives setting information of conditional handover including first cell information of a first cell belonging to a master cell group and second cell information of a second cell belonging to a secondary cell group; an evaluation unit that recognizes each of the first cell and the second cell as a candidate cell for the conditional handover based on the setting information of the conditional handover and evaluates the candidate cell(s); and an execution unit that executes the conditional handover when the candidate cell satisfies a condition(s) for the conditional handover, wherein when executing the conditional handover on the second cell which is the candidate cell, the execution unit performs switching of a target cell for the conditional handover and executes the conditional handover by treating the second cell as the first cell.

## Description

### TECHNICAL FIELD

The present invention relates to a terminal device and a radio communication method.

### BACKGROUND ART

Regarding the 3GPP (Third Generation Partnership Project), which is an international standardizing body, NR (New Radio), which is a new radio access technology targeted at the 5^{th} generation (5G) cellular systems, is being examined. Concerning NR, a technology that makes it possible to implement a wider variety of services than those of LTE and LTE-Advanced, which are the 4^{th} generation (4G) cellular systems, is being studied.

For example, regarding NR, Conditional Handover (CHO) for setting cell information of a handover destination in advance is being examined for the purpose of enhancing robustness (safety) of Handover (HO) (see NPL 1). The effect of enhancing the success probability of the handover can be expected by introducing CHO.

### CITATION LIST

### NON-PATENT LITERATURE

NPL 1: 3GPP TS 38.300

### SUMMARY OF THE INVENTION

### PROBLEMS TO BE SOLVED BY THE INVENTION

Regarding the CHO procedure, the application of the CHO not only to a master cell group (MCG: Master Cell Group) including a primary cell(s) (PCell(s): Primary Cell(s)), but also to a cell group other than the master cell group, that is, a secondary cell group (SCG: Secondary Cell Group) including a primary secondary cell(s) (PSCell(s): Primary SCell(s)) has been contemplated; however, the conventional CHO procedure gives no consideration to such expansion. Accordingly, it is necessary to optimize the CHO procedure in order to apply it to the SCG, but no such proposal has been made yet.

This disclosure was devised in light of the above-described circumstances and it is an object of the disclosure to provide an optimum CHO procedure when it is applied not only to the MCG, but also to the SCG.

### MEANS TO SOLVE THE PROBLEMS

A terminal device according to one aspect of this disclosure includes: a reception unit that receives setting information of conditional handover including first cell information of a first cell belonging to a master cell group and second cell information of a second cell belonging to a secondary cell group; an evaluation unit that recognizes each of the first cell and the second cell as a candidate cell for the conditional handover based on the setting information of the conditional handover and evaluates the candidate cell; and an execution unit that executes the conditional handover when the candidate cell satisfies a condition for the conditional handover, wherein when executing the conditional handover on the second cell which is the candidate cell, the execution unit performs switching of a target cell for the conditional handover and executes the conditional handover by treating the second cell as the first cell.

A radio communication method according to one aspect of this disclosure is a radio communication method performed by a terminal device, wherein the radio communication method includes: a reception step of receiving setting information of conditional handover including first cell information of a first cell belonging to a master cell group and second cell information of a second cell belonging to a secondary cell group; an evaluation step of recognizing each of the first cell and the second cell as a candidate cell for the conditional handover based on the setting information of the conditional handover and evaluating the candidate cell; and an execution step of executing the conditional handover when the candidate cell satisfies a condition for the conditional handover, wherein in the execution step when executing the conditional handover on the second cell which is the candidate cell, a target cell for the conditional handover is switched and the conditional handover is executed by treating the second cell as the first cell.

### ADVANTAGEOUS EFFECTS OF THE INVENTION

According to this disclosure, it is possible to provide the optimum CHO procedure when it is applied not only to the MCG, but also to the SCG.

### BRIEF DESCRIPTION OF DRAWINGS

[Fig. 1] Fig. 1 is a diagram for explaining a basic procedure for the CHO in a current state;
[Fig. 2] Fig. 2 is a diagram illustrating an example of the configuration of a radio communication system according to this embodiment;
[Fig. 3] Fig. 3 is a diagram illustrating an example of a hardware configuration of a terminal and a base station;
[Fig. 4] Fig. 4 is a diagram illustrating an example of a functional block configuration of the base station;
[Fig. 5] Fig. 5 is a diagram illustrating an example of a functional block configuration of the terminal;
[Fig. 6] Fig. 6 is a diagram illustrating CHO setting information according to a first measure;
[Fig. 7] Fig. 7 is a flowchart illustrating an example of a processing sequence according to the first measure;
[Fig. 8] Fig. 8 is an explanatory diagram for explaining a CHO procedure according to a second measure;
[Fig. 9] Fig. 9 is a flowchart illustrating an example of a processing sequence according to the second measure; and
[Fig. 10] Fig. 10 is an explanatory diagram for explaining bearer types.

### DESCRIPTION OF EMBODIMENTS

Embodiments of the present invention will be explained with reference to the attached drawings. It should be noted that in each drawing, elements to which the same reference numeral is assigned may have the same configuration or similar configurations.

### A. This Embodiment

### (Basic Procedure for CHO in Current State)

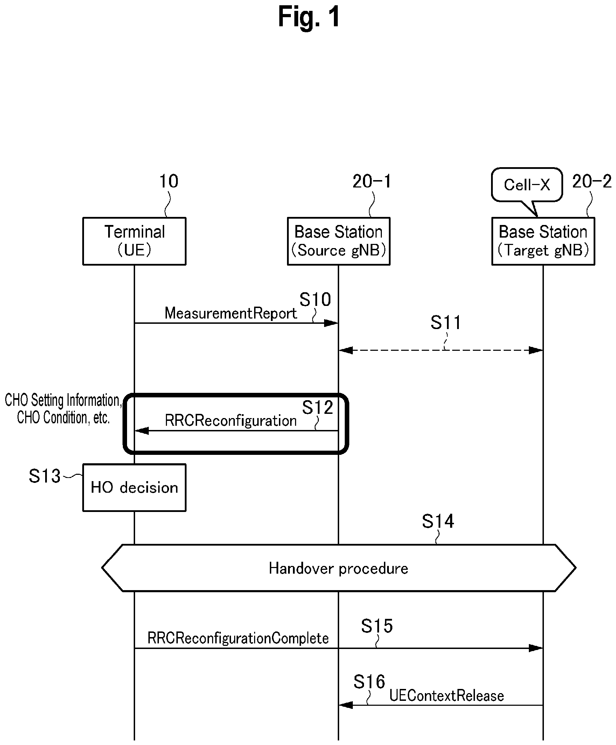

An explanation will be firstly provided about a basic procedure for the CHO in the current state by using Fig. 1. Incidentally, in the following explanation, a cover area formed by each base station 20-1, 20-2 will be referred to as a "cell." Moreover, when the base station 20-1 and the base station 20-2 are not distinguished, they will be described as the base station(s) 20.

The terminal 10 measures the quality of cells around it; starts a measurement report procedure when a measurement event (even trigger condition) which was set (designated or reported) in advance regarding at least one (Cell-X) of measurement object cells (that is, CHO candidate cells) is established (when the measurement result satisfies the measurement event) or when a cyclic measurement report is set and the set cycle expires; and transmits a measurement report message (Measurement Report) including the measurement results of the related cells to the base station 20-1 (S10).

The base station 20-1 which has received the measurement report message judges, based on the received measurement result, whether or not to provide (or set) the relevant CHO candidate cell and its corresponding measurement event condition(s) to the terminal 10; and if it is determined as being necessary to do so, the base station 20-1 provides the CHO setting information to the terminal 10. Typically, the base station 20-1 requests that the base station 20-2 to which the reported CHO candidate cell (Cell-X) belongs should prepare for the HO; and the terminal 10 exchanges information for accessing the base station 20-2 with the base stations 20 (S11). Then, the base station 20-1 generates an RRC message (RRC Reconfiguration) including necessary information for the terminal 10 to evaluate the relevant cell regarding the CHO provided by the base station 20-2 (hereinafter referred to as "CHO setting information") and a measurement event condition regarding the CHO (hereinafter referred to as a "CHO condition") and transmits the generated RRC message to the terminal 10 (S12).

The terminal 10 decides whether or not to start the CHO based on the CHO setting information and the CHO condition included in the received RRC message by checking via comparison (or evaluation), based on a measurement result of a downlink signal and the CHO condition, whether the CHO candidate cell (Cell-X) satisfies the CHO condition or not. When the CHO candidate cell satisfies the CHO condition, the terminal 10 tries the HO on the base station 20-2 as a CHO target cell based on the reported CHO setting information (S13) and tries to acquire downlink synchronization with, and random access to, the base station 20-2 (S14). If the random-access procedure with the base station 20-2 has been performed successfully, the terminal 10 transmits a response message (RRC Reconfiguration Complete) to the base station 20-2 in response to the received RRC message (S15). Then, the base station 20-2 determines that the CHO has been performed successfully, transmits a message to the base station 20-1 to command a deletion of UE context (terminal-related information regarding the connection) of the terminal 10 (S16), and completes the CHO procedure.

### (Measure for Applying CHO to SCG)

### <First Measure>

Since the current-state CHO procedure is premised on the MCG, if the current-state CHO procedure is directly applied to the SCG, the terminal 10 cannot distinguish whether the relevant cell to be evaluated as a CHO candidate cell is a PCell belonging to the MCG or a PSCell belonging to the SCG. Accordingly, even when the base station 20 has reported the CHO setting information by intending that the relevant cell would be a PCell belonging to the MCG, it may possibly execute the CHO on a PSCell belonging to the SCG. Specifically speaking, according to the conventional procedure, the terminal 10 cannot correctly evaluate a PCell(s) belonging to the MCG and a PSCell(s) belonging to the SCG, so it cannot set these cells at the same time. Also, the base station 20 cannot set the PCell(s) belonging to the MCG and the PSCell(s) belonging to the SCG to the terminal 10 at the same time. In order to solve the above-described problem, a first measure defines the CHO setting information so that the terminal 10 recognizes only the PCell(s) belonging to the MCG as a CHO candidate cell(s) (in other words, the PSCell(s) belonging to the SCG is recognized as a non-target(s) of the CHO candidate cell(s)).

### <Second Measure>

Since a PCell(s) belonging to the SCG has a similar function (for example, a common search space) to that of a PCell(s) belonging to the MCG, a second measure defines the CHO procedure to recognize not only the PCell(s) belonging to the MCG, but also the PSCell(s) belonging to the SCG as the CHO candidate cell(s).

### <System Configuration>

An explanation will be provided about a radio communication system according to this embodiment. The radio communication system according to this embodiment is targeted at NR, however, without limitation. For example, the radio communication system according to this embodiment can be also applied to LTE and LTE-Advanced. Moreover, this embodiment can be also applied to a radio communication system which partly employs NR. More generally, this embodiment can be applied to a radio communication system equipped with at least a terminal and a base station, which includes radio communication systems in the future. Incidentally, in the description below, LTE and LTE-Advanced will be also referred to as EUTRA, all of which have the same meaning.

An area (cover area) formed by a base station will be referred to as a cell. Also, EUTRA and NR are cellular communication systems constructed by a plurality of cells. Either method of TDD (Time Division Duplex) or FDD (Frequency Division Duplex) may be applied to the radio communication system according to this embodiment and a different method may be applied to each cell.

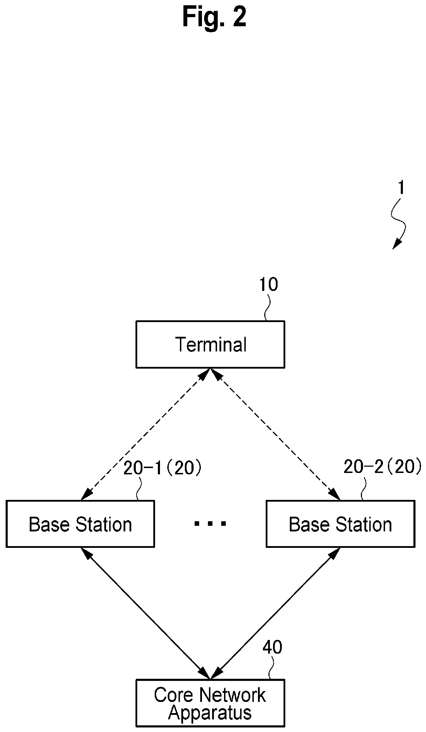

Fig. 2 is a diagram illustrating an example of the configuration of the radio communication system 1 according to this embodiment.

The terminal 10 is connected wirelessly to the base station 20-1 or the base station 20-2 respectively. In the description below, when the base station 20-1 and the base station 20-2 are not distinguished from each other, they will be described as the base stations 20. Moreover, the terminal 10 can be connected wirelessly to the base station 20-1 and the base station 20-2 at the same time. The base station 20-1 and the base station 20-2 can use EUTRA or NR. For example, the base station 20-1 may use NR and the base station 20-2 may use EUTRA, or vice versa. The base station 20 in EUTRA will be referred as eNB (evolved NodeB) and the base station 20 in NR will be referred to as gNB (g-NodeB). When the expression "base station 20" is used hereinafter, it includes the meanings of both eNB and gNB. Furthermore, the terminal 10 in EUTRA and NR will be referred to as UE (User Equipment). The base station 20 which is gNB may be connected with the terminal 10 by using part of the frequency bandwidth used by it (BWP: bandwidth part). When the expression "cell" is used hereinafter, it includes BWP.

The terminal 10 is connected with a base station(s) 20. The terminal 10 may be connected (carrier aggregation) with the base station 20 by using a plurality of cells. When the terminal 10 is connected with a plurality of base stations 20 (dual connectivity), a base station 20 which is initially connected is called a master node (MN: Master Node) and a base station(s) 20 which is additionally connected is called a secondary node (SN: Secondary Node). One or more cells provided by the master node among the plurality of cells connected by the terminal 10 are called a master cell group (MCG: Master Cell Group). Also, one or more cells provided by the secondary node among the plurality of cells connected by the terminal 10 are called a secondary cell group (SCG: Secondary Cell Group). Incidentally, the master cell group (MCG) may optionally include one or a plurality of secondary cells (SCells) besides the primary cells (PCells). Moreover, the secondary cell group (SCG) may optionally include one or a plurality of secondary cells (SCells) besides primary secondary cells (PSCells). Incidentally, the MCG may also be called a primary cell group (PCG: Primary Cell Group).

The base stations 20 are connected via a base station interface. Moreover, the base station 20 and a core network apparatus 40 are connected via a core network interface. The base station interface is used to, for example, exchange a control signal required for the handover and cooperative operation between the base stations 20. The core network apparatus 40 has base stations 20 as its subordinates and mainly manages load control between the base stations 20, calling (paging) of the terminal 10, and migration control such as location registration.

The terminal 10 and the base station(s) 20 transmit/receive an RRC message in a radio resource control (RRC: Radio Resource Control) layer. Also, the terminal 10 and the base station 20 transmit and receive a MAC control element (MAC CE: MAC Control Element) in a medium access control (MAC: Medium Access Control) layer. The RRC message is transmitted as an RRC PDU (Protocol Data Unit), and a common control channel (CCCH: Common Control Channel), a dedicated control channel (DCCH: Dedicated Control Channel), a paging control channel (PCCH: Paging Control Channel), a broadcast control channel (BCCH: Broadcast Control Channel), or a multicast control channel (MCCH: Multicast Control Channel) is used as a logical channel to be mapped. The MAC CE is transmitted as a MAC PDU (or MAC subPDU). The MAC subPDU is equivalent to a service data unit (SDU: Service Data Unit) in the MAC layer, to which an 8-bit header is added; and the MAC PDU includes one or more MAC subPDUs.

### <Hardware Configuration>

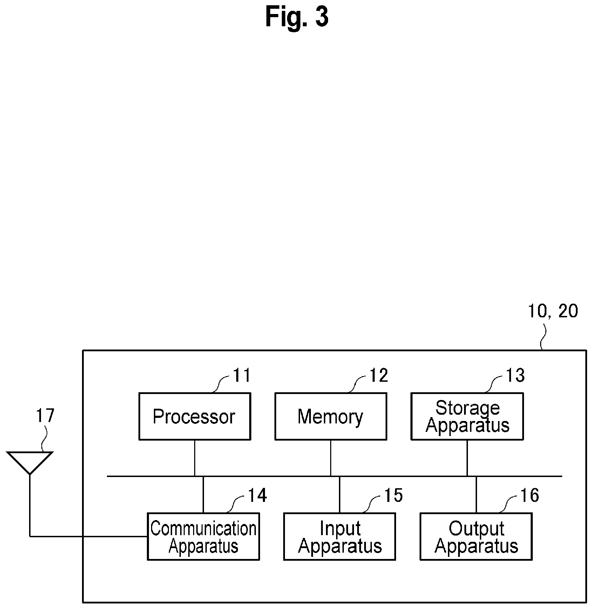

Fig. 3 is a diagram illustrating an example of a hardware configuration of the terminal 10 and the base station 20. The terminal 10 and the base station 20 have a processor 11, a memory 12, a storage apparatus 13, a communication apparatus 14 to perform wired or radio communication, an input apparatus 15 to accept input/output operation, an output apparatus 16 to output information, and an antenna 17.

The processor 11 is, for example, a CPU (Central Processing Unit) and controls the terminal 10 and the base station 20.

The memory 12 is configured of, for example, a ROM (Read Only Memory), an EPROM (Erasable Programmable ROM), an EEPROM (Electrically Erasable Programmable ROM) and/or a RAM (Random Access Memory).

The storage apparatus 13 is configured of storage such as an HDD(s) (Hard Disk Drive(s)), an SSD(s) (Solid State Drive(s)) and/or an eMMC(s) (embedded Multi-Media Card(s)).

The communication apparatus 14 is an apparatus which performs communication via a wired and/or radio network, and is, for example, a network card or a communication module. Moreover, the communication apparatus 14 may include an amplifier, an RF (Radio Frequency) apparatus which performs processing relating to a radio signal, and a BB (Base Band) apparatus which performs base band signal processing.

The RF apparatus generates a radio signal to be transmitted from the antenna 17 by performing, for example, D/A conversion, modulation, frequency conversion, and power amplification on a digital base band signal received from the BB apparatus. Moreover, the RF apparatus generates a digital base band signal by performing, for example, frequency conversion, demodulation, and A/D conversion on the radio signal received from the antenna 17 and transmits it to the BB apparatus. The BB apparatus performs processing for converting the digital base band signal into packet data (for example, IP packets) and processing for converting the IP packets into the digital base band signal.

The input apparatus 15 is, for example, a keyboard, a touch panel, a mouse and/or a microphone. The output apparatus 16 is, for example, a display and/or a speaker.

### <Functional Block Configuration>

### (Base Station)

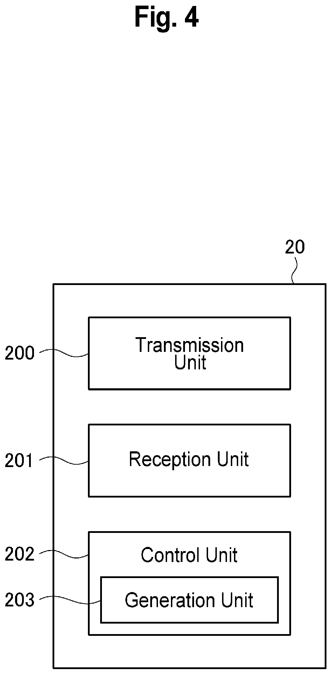

Fig. 4 is a diagram illustrating an example of a functional block configuration of the base station 20. The base station 20 includes a transmission unit 200, a reception unit 201, and a control unit 202. Incidentally, Fig. 4 shows main functional blocks in this embodiment. The transmission unit 200 and the reception unit 201 may be implemented by, for example, the communication apparatus 14 or may be implemented by the processor 11 in addition to the communication apparatus 14 by executing programs stored in the storage apparatus 13. The control unit 202 may be implemented by the processor 11 by executing programs stored in the storage apparatus 13. Moreover, the programs can be stored in a storage medium. The storage medium in which the programs are stored may be a non-transitory computer-readable storage medium. The non-transitory storage medium is not particularly limited, but it may be a storage medium such as a USB memory or a CD-ROM.

The transmission unit 200 generates a downlink (Down Link) signal to be transmitted to the terminal 10 and transmits it.

The reception unit 201 receives an uplink (Up Link) signal from the terminal 10.

The control unit 202 performs various kinds of processing regarding, for example, RRC layers. Also, the control unit 202 includes a generation unit 203 which generates, for example, CHO setting information (CHO Configuration) indicating the CHO condition and necessary measurement conditions to start the CHO procedure. The CHO condition and the CHO setting information which are generated by the generation unit 203 are included in an RRC message, which is then transmitted from the transmission unit 200 to the terminal 10.

### (Terminal)

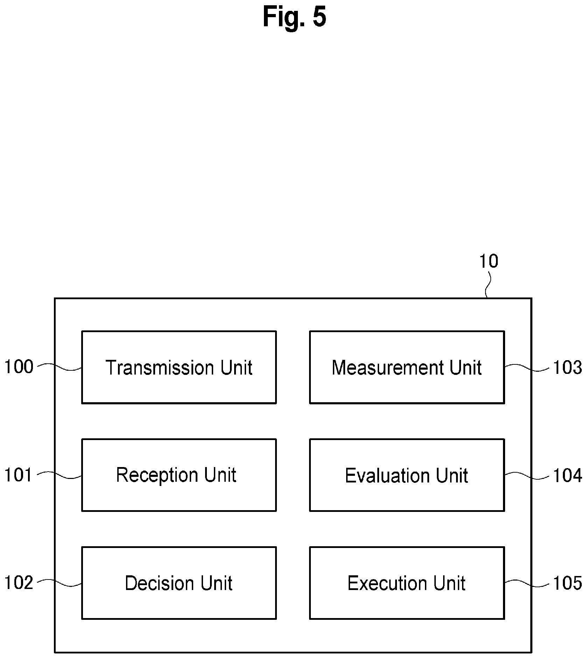

Fig. 5 is a diagram illustrating an example of a functional block configuration of the terminal 10. The terminal 10 includes a transmission unit 100, a reception unit 101, a decision unit 102, a measurement unit 103, an evaluation unit 104, and an execution unit 105. Incidentally, Fig. 5 shows main functional blocks in this embodiment. The transmission unit 100 and the reception unit 101 may be implemented by, for example, the communication apparatus 14 or may be implemented by the processor 11 in addition to the communication apparatus 14 by executing programs stored in the storage apparatus 13. The decision unit 102, the measurement unit 103, the evaluation unit 104, and the execution unit 105 may be implemented by the processor 11 by executing programs stored in the storage apparatus 13. Moreover, the programs can be stored in a storage medium. The storage medium in which the programs are stored may be a non-transitory computer-readable storage medium. The non-transitory storage medium is not particularly limited, but it may be a storage medium such as a USB memory or a CD-ROM.

The transmission unit 100 generates an uplink signal to be transmitted to the base station 20 and transmits it.

The reception unit 101 receives a downlink signal from the base station 20. Also, the reception unit 101 receives an RRC message including the CHO condition and the CHO setting information from the base station 20. Incidentally, the CHO condition and the CHO setting information which are received are stored in the storage apparatus 13.

The decision unit 102 decides a CHO candidate cell to be evaluated from among a plurality of cells based on the CHO setting information.

The measurement unit 103 measures reception quality (measurement quality and cell quality) of the decided CHO candidate cell and outputs the cell quality measurement result. The cell quality may be, for example, RSRP (Reference Signal Received Power), RSRQ (Reference Signal Received Quality), RSSI (received signal strength indicator), and RS-SINR (Reference Signal-Signal to Interference and Noise Ratio).

The evaluation unit 104 evaluates whether the decided CHO candidate cell satisfies the CHO condition or not, based on time information, the cell quality measurement result, etc. For example, if the evaluation unit 104 obtains a specified cell quality measurement result within the evaluation time indicated by the time information (if a measurement event corresponding to the previously set CHO is satisfied), it determines that the CHO condition is satisfied.

When the CHO candidate cell satisfies the CHO condition, the execution unit 105 executes the CHO.

### <Details of First Measure>

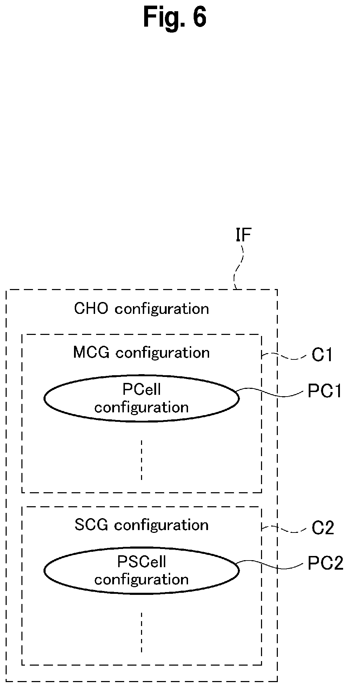

Fig. 6 is a diagram illustrating a CHO setting information (CHO configuration) IF according to the first measure.

The CHO setting information IF is configured by including at least cell information for the terminal 10 to judge whether the relevant cell is a CHO candidate cell or not. Referring to Fig. 6, the CHO setting information IF may include either first cell information (MCG configuration) C1 about each cell belonging to the MCG and second cell information (SCG configuration) C2 about each cell belonging to the SCG, or both of them. The first cell information C1 includes at least first primary cell information (PCell configuration) PC1 about PCells and the second cell information C2 includes at least second primary cell information (PSCell configuration) PC2 about PSCells. Incidentally, the first cell information C1 and the second cell information C2 may be configured, respectively, to include, for example, information about SCells (cells for providing wireless resources in addition to PCells). Moreover, the CHO setting information IF may include, as measurement settings, a measurement event targeted at the CHO candidate cell, its related parameter (measurement object) and a measurement ID which links the measurement object with the measurement event.

For example, at least identification information for identifying each cell is set in the first cell information C1 and the second cell information C2. For example, a cell index (Cell index) for identifying each PCell or PSCell is set in the first primary cell information PC1 and the second primary cell information PC2, respectively. As one example, a possible aspect would be such that a cell index "0" (fixed) is set in a PCell and, for example, a cell index "1" (optional) is set in a PSCell; however, as a matter of course, the cell indexes are not limited to this example. The base station 20 may also notify the terminal 10 of the CHO setting information IF by omitting the cell index. When the terminal 10 receives the CHO setting information IF from which the cell index is omitted, the relevant cell may be recognized as a PCell and the cell index "0" is designated. Moreover, there is no intention to limit the identification information to the cell index(es) and, for example, the identification information may be bit information indicating to which cell group, either the MCG or SCG, the relevant cell belongs, an additional identifier indicating the MCG (PCell) (information for identifying the MCG), and an additional identifier indicating the SCG (PSCell).

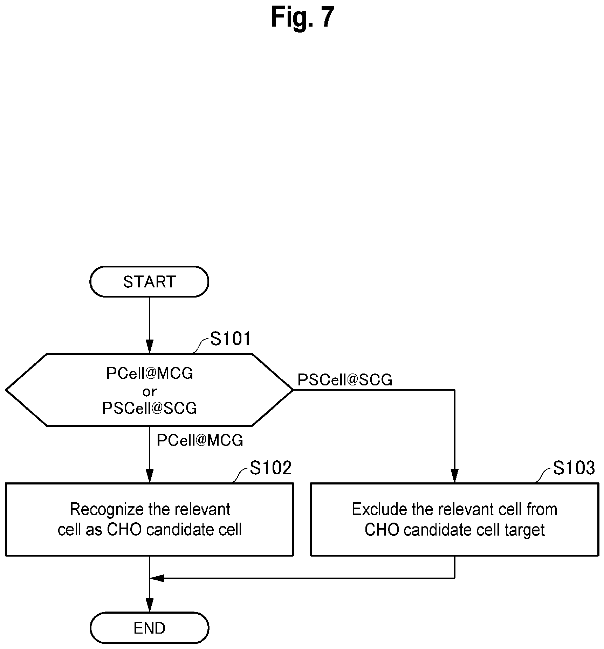

Fig. 7 is a flowchart illustrating an example of a processing sequence regarding the first measure performed by the terminal 10. It is assumed as a premise that the terminal 10 has received the CHO condition and the CHO setting information from the base station 20.

The terminal 10 refers to the CHO setting information IF and decides the CHO candidate cell from among a plurality of cells. Specifically speaking, the terminal 10 judges which of the cell groups, either the MCG or SCG, the relevant cell belongs to, by comparing the identification information (the cell index in this example) included in each primary cell information PC1, PC2 with the cell index of each cell (S101). Alternatively, the terminal 10 judges which of the cell groups, either the MCG or SCG, the relevant cell belongs to, based on the bit information indicating which of the cell groups, either the MCG or SCG, the relevant cell belongs to. Alternatively, the terminal 10 determines the MCG based on the additional identifier indicating the MCG (PCell) and determines the other cell to be the SCG. Alternatively, the terminal 10 determines the SCG based on the additional identifier indicating the SCG (PSCell) and determines the other cell to be the MCG. The terminal 10 recognizes the PCell belonging to the MCG as the CHO candidate cell (S102), while it excludes the PSCell belonging to the SCG as a target CHO candidate cell (S103).

Furthermore, if an SCG is set and the terminal 10 receives the CHO setting information IF in which the first cell information C1 and the second cell information C2 are set, the terminal 10 may evaluate the CHO condition, regarding which the PCell (the primary cell information PC1) is considered as the CHO target cell, and may, at the same time, start the evaluation of the measurement event which is linked to the PSCell belonging to the original SCG and the PSCell designated (set) by the second cell information C2 (the primary cell information PC2). If the measurement event linked to the PSCell (the primary cell information PC2) is established, the terminal 10S may start the procedure regarding an addition of an SCG or a change of the SCG.

Moreover, when an SCG is set and the CHO targeted at a PCell belonging to the MCG is established, and if the cell index or the frequency and the physical cell ID of a PSCell(s) included in the second cell information C2 of the CHO setting information IF are different from those of the SCG which is currently set, the terminal 10 may start the procedure regarding the SCG addition or the SCG change. If the cell index or the frequency and the physical cell ID of a PSCell(s) included in the second cell information C2 of the CHO setting information IF are the same as those of the SCG which is currently set, the terminal 10 may maintain the SCG and does not have to start the change procedure. Under this circumstance, the terminal 10 may deactivate the SCG (SCG deactivation).

Because of the above-described configuration, the terminal 10 can implement the CHO efficiently without evaluating whether the PSCell belonging to the SCG satisfies the CHO condition or not.

Incidentally, the terminal 10 may notify the base station 20 in advance of capability information (UE Capability) indicating that its own terminal is a terminal compatible with the first measure. Under this circumstance, the capability information may be reported, other than via the terminal-based notification, in a format of support notification on the basis of a frequency range (FR) or a band combination.

### <Details of Second Measure>

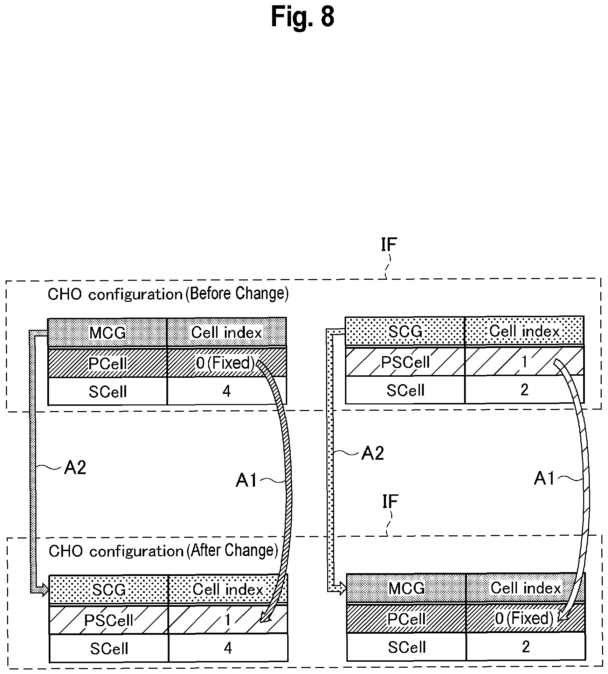

Fig. 8 is an explanatory diagram for explaining the CHO procedure according to the second measure and its upper part shows the CHO setting information IF before a change and its lower part shows the CHO setting information IF after the change.

With the second measure, not only a PCell(s) belonging to the MCG, but also a PSCell(s) belonging to the SCG are considered as CHO candidate cells and, furthermore, for example, a setting change of the CHO setting information IF is performed when executing the CHO targeted on the PSCell(s).

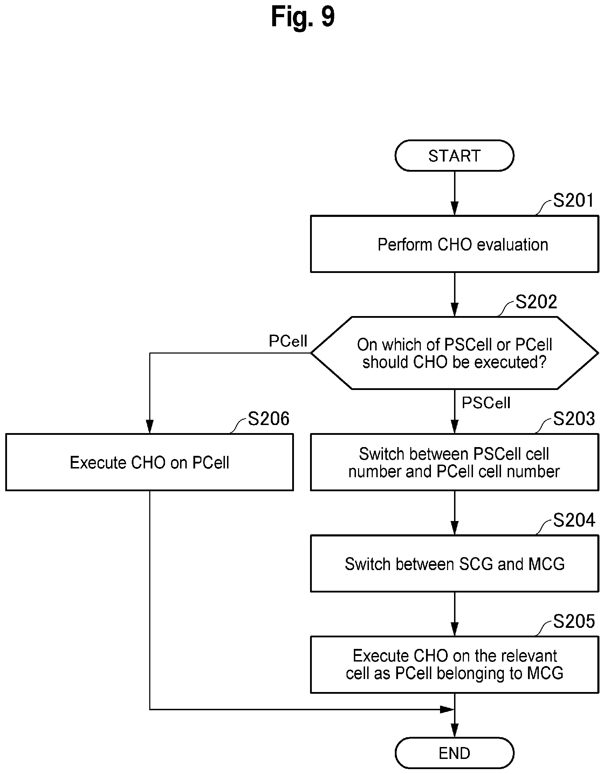

Fig. 9 is a flowchart illustrating an example of a processing sequence relating to the second measure performed by the terminal 10. It is assumed as a premise that the terminal 10 has received the CHO condition and the CHO setting information from the base station 20.

With the terminal 10, either the MCG or the SCG, or both of them are designated by at least the CHO setting information IF. The terminal 10 recognizes a PSCell and a PCell as CHO candidate cells based on the received CHO setting information IF. Moreover, the terminal 10 measures the CHO candidate cell(s) and evaluates whether the CHO condition indicated by the measurement event with the measurement ID linked to the CHO candidate cell is satisfied or not, with respect to the relevant CHO candidate cell (S201).

If the measurement event which is set based on the CHO evaluation is established, the terminal 10 judges whether or not to try (execute) the CHO on either the PSCell or the PCell, based on the target cell regarding which the measurement event has been established (S202). If the terminal 10 determines that the CHO should be executed on the PSCell (that is, if the measurement event is established regarding the PSCell), the cell index of the PSCell is switched to the cell index of the PCell (S203; see A1 indicated in Fig. 8), and then switching between the SCG and the MCG is performed (S204; see A2 indicated in Fig. 8). Then, the terminal 10 executes the CHO by treating the PSCell belonging to the SCG as the PCell belonging to the MCG (S205). Incidentally, to switch between the cell index of PSCell and the cell index of the PCell in order to switch between the SCG and the MCG is called "switching of the CHO target cell."

Meanwhile, when the measurement event which is set based on the CHO evaluation is established and if the terminal 10 determines that the CHO should be executed on the PCell, not the PSCell (that is, if the measurement event is established regarding the PCell), the terminal 10 does not perform switching of the CHO target cell and executes the CHO directly on the PCell (S206).

Moreover, the terminal 10 may judge whether to perform switching of the CHO target cell, based on a parameter(s) designated (set or reported) from the base station 20. The base station 20 may designate to switch the CHO target cell on a cell basis or on an event basis. If switching of the CHO target cell is not explicitly designated, the terminal 10 may determine not to perform switching of the CHO target cell.

When the switching of the CHO target cell is not performed and the SCG is set, the terminal 10 may perform the procedure regarding the SCG addition or the SCG change targeted at the PSCell included in the second cell information C2 of the CHO setting information IF based on the evaluation result of the set measurement event.

Because of the above-described configuration, the terminal 10 can recognize not only the PCell belonging to the MCG, but also the PSCell belonging to the SCG as the CHO target cells and implement the CHO efficiently.

Incidentally, the terminal 10 may notify the base station 20 of the changed CHO setting information IF after switching the CHO target cell as described above. Alternatively, the terminal 10 may notify the base station 20 of information indicating that the switching has been performed.

The terminal 10 may notify the base station 20 in advance of capability information (UE Capability) indicating that its own terminal is a terminal compatible with the second measure. Under this circumstance, the capability information may be reported, other than via the terminal-based notification, in a format of support notification on the basis of a frequency range (FR) or a band combination.

### B. Variations

This embodiment described above is intended to facilitate understanding of the present invention and is not designed to interpret the present invention in a limited manner. The flowcharts and sequences explained in the embodiment, the respective elements included in the embodiment, and their arrangement, materials, conditions, shapes, sizes, etc. are not limited to those illustrated by the example and can be changed as appropriate.

### <Variation 1 >

Regarding the aforementioned second measure, the settings regarding the original MCG may be released after switching the CHO target cell. For example, after switching between the SCG and the MCG, the terminal 10 may release the settings regarding the MCG before the switching (for example, all the settings regarding the MCG or part of the settings, such as the setting of the cell index). The terminal 10 may determine whether to release the settings or not based on an instruction (setting) from the base station 20 or the terminal 10 may determine by itself whether to release the settings as one procedure in the CHO procedure. For example, it may determine whether to release the settings or not based on the quality of the original MCG (PCell). Furthermore, all the cells included in the SCG may be deactivated (SCG deactivation) after switching the settings regarding the MCG to the SCG. The base station 20 may issue an instruction via an RRC message to the terminal 10 as to whether to deactivate the SCG or not at the same time as the CHO setting. The terminal 10 may deactivate the SCG based on the instruction from the base station 20.

### <Variation 2>

If regarding the aforementioned second measure a radio link failure (RLF) has occurred or an HO failure has occurred while whether the CHO condition is satisfied or not is evaluated (CHO evaluation), the terminal 10 may reuse the settings regarding the PSCell.

Specifically speaking, the terminal 10 which has detected the radio link failure or the HO failure selects a cell to try reconnection in accordance with a specified cell selection condition. Under this circumstance, if the selected cell is a target cell for the CHO (that is, a PSCell designated by the CHO setting information IF), the terminal 10 may start RRC reconfiguration procedure to which the settings regarding the PSCell are applied, instead of transmitting an RRC message regarding RRC reconnection (RRC reestablishment request). Incidentally, if the terminal 10 reuses the settings regarding the PSCell, it may perform the aforementioned procedure regarding the switching by, for example, switching from the cell index of the PSCell to the cell index of the PCell (that is, "0"). Under this circumstance, regarding the procedure for determining whether to release the settings regarding the MCG or not, a method similar to Variation 1 may be applied. Moreover, the terminal 10 may reuse the settings regarding the PSCell as the target cell when an SCG link failure has occurred. Moreover, the terminal 10 may notify the base station 20 of the performance of the RRC reconfiguration procedure to which the settings regarding the PSCell are applied, by using the corresponding RRC message (RRC reconfiguration Complete). Under this circumstance, the terminal 10 causes information capable of identifying the PSCell (SCG) applied at least from the CHO setting information (for example, the first cell information C1 and the second cell information C2, or the first primary cell information PC1 and the second primary cell information PC2, or the identification information indicating the cell group) to be included in the RRC message and then transmits the RRC message.

### <Variation 3>

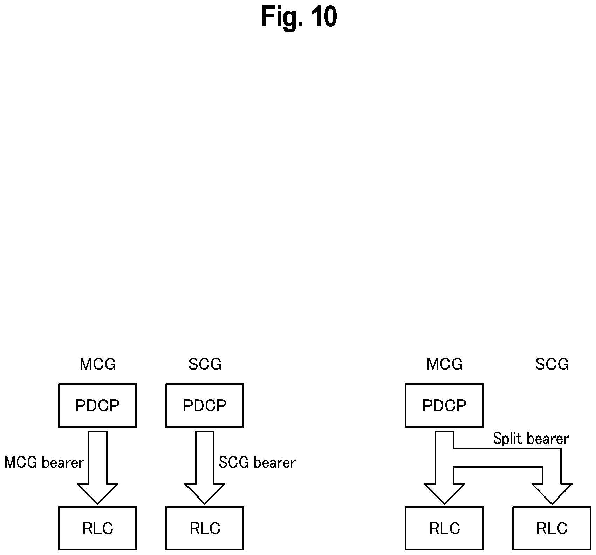

Regarding the aforementioned second measure, only when a specific radio bearer is set by the base station 20 as a communication path for user data which passes through the SCG may the terminal 10 recognize a PSCell belonging to the SCG as a CHO candidate cell. As for bearer types, three types of radio bearers indicated in Fig. 10, that is, an MCG bearer, an SCG bearer, and a split bearer are defined; and only when the SCG bearer is set may the terminal 10 recognize the PSCell as the CHO candidate cell. If the terminal 10 is notified of an SCG (PSCell) to which the specific bearer is not set, the terminal 10 may recognize that SCG (PSCell) as not being a target cell for the CHO, but as being a target cell for the SCG addition procedure or a target cell for the PSCell change procedure.

### <Conclusion>

According to this disclosure described above, it is possible to provide the optimum CHO procedure when applied not only to the MCG, but also to the SCG. Therefore, the technology according to this disclosure can contribute to the achievement of Goal 9 of the Sustainable Development Goals (SDGs), which aims to "build resilient infrastructure, promote sustainable industrialization and foster innovation."

### REFERENCE SIGNS LIST

- 1: radio communication system
- 10: terminal
- 11: processor
- 12: memory
- 13: storage apparatus
- 14: communication apparatus
- 15: input apparatus
- 16: output apparatus
- 17: antenna
- 20: base station
- 100: transmission unit
- 101: reception unit
- 102: decision unit
- 103: measurement unit
- 104: evaluation unit
- 105: execution unit
- 200: transmission unit
- 201: reception unit
- 202: control unit
- 203: generation unit

## Claims

1. A terminal device comprising:
a reception unit that receives setting information of conditional handover including first cell information of a first cell belonging to a master cell group and second cell information of a second cell belonging to a secondary cell group;
an evaluation unit that recognizes each of the first cell and the second cell as a candidate cell for the conditional handover based on the setting information of the conditional handover and evaluates the candidate cell; and
an execution unit that executes the conditional handover when the candidate cell satisfies a condition for the conditional handover,
wherein when executing the conditional handover on the second cell which is the candidate cell, the execution unit performs switching of a target cell for the conditional handover and executes the conditional handover by treating the second cell as the first cell.

2. The terminal device according to claim 1,
wherein the switching of the target cell for the conditional handover is to switch between the master cell group and the secondary cell group by switching an index between the second cell and the first cell; and
wherein the first cell is a primary cell and the second cell is a primary secondary cell.

3. The terminal device according to claim 1 or 2,
wherein the execution unit executes the conditional handover by treating the second cell as the first cell only when a specific bearer is set.

4. A terminal device comprising:
a reception unit that receives setting information of conditional handover including first cell information of a first cell belonging to a master cell group and second cell information of a second cell belonging to a secondary cell group;
an evaluation unit that evaluates a candidate cell for the conditional handover based on the setting information of the conditional handover; and
an execution unit that executes the conditional handover when the candidate cell satisfies a condition for the conditional handover,
wherein the first cell information and the second cell information include identification information for identifying a cell group to which each cell belongs; and
wherein the evaluation unit judges whether a cell is applicable as the first cell or not by referring to the identification information, and then recognizes and evaluates the cell, which is judged as the first cell, as the candidate cell.

5. The terminal device according to claim 4,
wherein the evaluation unit judges whether or not a cell which is judged as the second cell should be added as a new secondary cell group during a procedure for the conditional handover, based on the secondary cell group of the terminal device and setting of the second cell.

6. The terminal device according to claim 5,
wherein the identification information is information for identifying a cell index or a cell group.

7. A radio communication method performed by a terminal device, the method comprising:
a reception step of receiving setting information of conditional handover including first cell information of a first cell belonging to a master cell group and second cell information of a second cell belonging to a secondary cell group;
an evaluation step of recognizing each of the first cell and the second cell as a candidate cell for the conditional handover based on the setting information of the conditional handover and evaluating the candidate cell; and
an execution step of executing the conditional handover when the candidate cell satisfies a condition for the conditional handover,
wherein in the execution step when executing the conditional handover on the second cell which is the candidate cell, a target cell for the conditional handover is switched and the conditional handover is executed by treating the second cell as the first cell.
